Europäisches Patentamt

**European Patent Office**

**Office européen des brevets**

(19)

(11) Numéro de publication: **0 022 890**
**B1**

(12) **FASCICULE DE BREVET EUROPEEN**

(45) Date de publication du fascicule du brevet: **19.10.83**

(51) Int. Cl.³: **C 04 B 25/06**

(21) Numéro de dépôt: **79830022.4**

(22) Date de dépôt: **18.07.79**

(54) **Produit à base de résines polyesters et époxy et de charges inorganiques. Application à la réalisation d'éléments de construction préfabriqués.**

(43) Date de publication de la demande:
**28.01.81 Bulletin 81/4**

(45) Mention de la délivrance du brevet:
**19.10.83 Bulletin 83/42**

(84) Etats contractants désignés:
**AT BE CH DE FR GB IT LU NL SE**

(56) Documents cités:
**AT - B - 228 113**
**DE - A - 1 471 146**
**DE - A - 1 646 408**
**DE - A - 1 646 711**
**DE - A - 1 900 789**
**DE - A - 1 942 653**
**DE - B - 1 925 358**
**FR - A - 2 255 342**
**FR - A - 2 352 764**

(73) Titulaire: **Antoci, Francesco**
**Viale Europa 459**
**I-97100 Ragusa (IT)**

(72) Inventeur: **Antoci, Francesco**
**Viale Europa 459**
**I-97100 Ragusa (IT)**

(74) Mandataire: **Domenighetti Guissani, Dafne et al,**
**c/o Ufficio Brevetti Ing. A. Racheli & C. Viale San**
**Michele del Carso 4**
**I-20144 Milano (IT)**

Le dossier contient des informations techniques présentées postérieurement au dépôt de la demande et ne figurant pas dans le présent fascicule.

Courier Press, Leamington Spa, England.

Produit à base de résines polyester et epoxy et de charges inorganiques. Application á la réalisation d'éléments de construction préfabriqués.

Le produit objet de l'invention, est formé d'un mélange de résines polyester et epoxy et de charges inorganiques et est apte à la réalisation de dalles de dimensions variant de 10×10 cm à 125×130 cm avec des épaisseurs variant de 4 à 30 mm qui sont utilisables dans le domaine de la construction pour la production de:

— dallages industriels, dallages à usage domestique pour utilisation à l'extérieur et à l'intérieur des locaux d'habitation,
— éléments préfabriqués pour escaliers (marches et sous-marches),
— éléments préfabriqués pour seuils et huisseries de portes et fenêtres,
— panneaux de revêtement intérieurs et extérieurs,
— panneaux décoratifs.

Dans le domaine de la construction, les dalles et panneaux finis actuellement réalisés à base de résines et de charges inorganiques ont des épaisseurs non inférieures à 20 mm et possèdent des caractéristiques mécaniques, chimiques et physiques étroitement liées à la nature du constituant inerte principal (charges inorganiques).

Toujours dans le domaine de la construction, on réalise également des dallages à usage domestique ou industriel par coulée sur place de mélanges à base de résines, technique qui présente les inconvénients de nécessiter sur place des équipements et une main d'oeuvre spécialisés et d'apporter des problèmes d'uniformité de coulée et de joints de dilatation.

L'invention, au contraire, permet d'obtenir même pour des dalles ayant un épaisseur minimum, un produit préfabriqué fini dans toutes les dimensions requises par le marché et répondant aux exigences d'une surface parfaitement plane, de bords rectilignes, de facilité de traitement parfaite (coupe, meulage, biseautage) et qui, selon l'usage auquel il est destiné, présente l'aspect et la consistance du granit ou une teinte unie dans la couleur désirée.

De plus, et en comparaison avec les matériaux actuellement produits, le produit de l'invention présente à épaisseur égale des caractéristiques mécaniques, physiques et chimiques améliorées.

Un objet de l'invention est donc une composition de base permettant la réalisation des produits susmentionnés, cette composition étant la suivante en pourcentages pondéraux:

| | |
|---|---|
| 1) résines polyester et epoxy | 10% |
| 2) diluant | 2% |
| 3) accélérateur | 0,02% |
| 4) catalysateur | 0,2% |
| 5) carbonate de calcium | 10% |
| 6) mica | 2,5% |
| 7) kaolin | 2,5% |
| 8) charges: gravier ou pigments d'oxydes | 72,78% |

L'invention concerne également des matériaux de construction préfabriquées réalisées à partir d'une telle composition.

A titre d'exemple, sont indiquées ci-après quelques caractéristiques concernant des carreaux réalisés selon l'invention:

**0 022 890**

| Format cm×cm | Epais. mm | Caractéristiques communes |
|---|---|---|
| 40×40<br>25×25 | 10<br>7 | Charge de rupture en flexion:<br>33077830 à 44129925 N/m²<br>(337,3 à 450,0 Kg/cm²) |
| 30×30<br>25×50 | 7<br>10 | Résistance à l'abrasion:<br>usure de 5,7 à 7,2 mm |
| 30×60<br>40×80 | 10<br>10 | Résistance au choc: 5,40 J<br>(0,55 Kgm) |
| 125×330<br>125×125 | 40<br>10 | Absorption d'eau:<br>0,11 à 0,18 |
| 30×240<br>15×240 | 30<br>10 | Résistance aux écarts de température:<br>inaltérabilité entre—15°C et+60°C |
| | | Résistance aux tâches et aux agents chimiques:<br>classe C1 (U.E.A. tc) |

## Revendications

1. Composition à base de résines polyester et epoxy et de charges inorganiques pour la réalisation de dallages, revêtements ou éléments préfabriqués pour la construction caractérisée en ce qu'elle est constituée de (pourcentages pondéraux):

|  |  |
|---|---|
| 1) résines polyester et epoxy | 10% |
| 2) diluant | 2% |
| 3) accélérateur | 0,02% |
| 4) catalyseur | 0,2% |
| 5) carbonate de calcium | 10% |
| 6) micca | 2,5% |
| 7) Kaolin | 2,5% |
| 8) charges: gravier ou pigments d'oxydes | 72,78% |

2. Application de la composition selon la revendication 1 à la réalisation d'éléments de construction préfabriqués.

## Patentansprüche

1. Zusammensetzung auf der Grundlage von Polyester- und Epoxydharzen und anorganischen Füllstoffen zur Verwirklichung von Platten. Verkleidungen oder vorgefertigten Bauelementen, dadurch gekennzeichnet, daß sie aus

|  |  |
|---|---|
| 1) Polyester- und Epoxydharzen | 10% |
| 2) Verdünnungsmittel | 2% |
| 3) Beschleuniger | 0,02% |
| 4) Katalisator | 0,2% |
| 5) Kaliumkarbonat | 10% |
| 6) Glimmer | 2,5% |
| 7) Kaolin | 2,5% |
| 8) Füllstoffen: Kies oder Oxydpigmente (in Gewichtsprozenten) besteht. | 72,78% |

2. Verwendung der Zusammensetzung nach Anspruch 1 zur Verwirklichung von vorgefertigen Bauelementen.

## Claims

1. A composition based on polyester and epoxy resins and inorganic charges for the production of slabs, coverings, or prefabricated elements for building, characterized in that it consists of (percentages by weight):

3

1) polyester and epoxy resins      10%
2) diluent      2%
3) accelerator      0,02%
4) catalyst      0,2%
5) calcium carbonate      10%
6) mica      2,5%
7) kaolin      2,5%
8) charges: gravel or oxide pigments      72,78%

2. Use of the composition according to Claim 1, for carrying out prefabricated building elements.